# EUROPEAN PATENT SPECIFICATION

(11) **EP 0 404 588 B1**
(45) Date of publication and mention of the grant of the patent: **13.08.1997**
(21) Application number: 90306840.1
(22) Date of filing: 22.06.1990
(51) Int. Cl.: G06F 1/26

(54) **A power supply control system and method for a computer**
Stromversorgungssteuerungssystem und -methode für einen Rechner
Système ét méthode de commande d'alimentation pour un ordinateur

(30) Priority: 23.06.1989 JP 162229/89; 23.06.1989 JP 162231/89; 23.06.1989 JP 162234/89; 23.06.1989 JP 162228/89
(43) Date of publication of application: 27.12.1990
(60) Divisional application: 95201411.6
(73) Proprietor: KABUSHIKI KAISHA TOSHIBA, Kawasaki-shi, Kanagawa-ken 210 (JP)
(72) Inventor: Nanno, Nobuyuki, c/o Intellectual Property Div., Minato-ku, Tokyo (JP); Akashi, Kazuo, c/o Intellectual Property Div., Minato-ku, Tokyo (JP); Seimiya, Hiromi, c/o Intellectual Property Div., Minato-ku, Tokyo (JP)
(74) Representative: Shindler, Nigel

(56) References cited:
- EP-A- 0 273 322
- FR-A- 2 622 749

## Description

This invention relates generally to computers and, more specifically, the power supply of a portable battery operated computer. The invention includes both a system and the method for controlling efficiently the power supply of such a portable computer.

As is known, recently computers have been developed which are convenient to carry. In conventional computers of these types, there are two primary methods for supplying the power. In one case, the power is supplied by an alternating current (AC) adapter. In other cases, the power is supplied by internal rechargeable batteries. In these two methods mentioned above, the central processing unit, hereafter called "CPU", must always verify the status of the external power supply and the charge level of the internal batteries. However, in conventional methods and systems of these types, one CPU also must control the voltages' of the external power supply and internal batteries, and this creates a burden for one CPU. The presently known systems and methods for supply control using one CPU are not efficient. Also, the known systems do not include any means for indicating to an operator the voltage of power supply status whether power is off.

FR26 22 749 discloses a power supply having a rechargeable battery in which the charging current and voltage are controlled by a microprocessor.

Accordingly, an object of the invention is to efficiently control a rechargeable power supply and current flowing from an AC adapter to internal batteries constantly.

A further object of the invention is to indicate the status of a power supply for a portable computer.

Still another object of the invention is to display the status of the power supply of a portable computer whether power is off to computer's operator.

In accordance with the present invention, the foregoing objects, among others, are achieved by providing a system and a method according to claims 1 and 4 respectively. Advantageous embodiments are apparent from the subclaims.

Other objects and features of the present invention will be apparent from the following description by way of example only taken in connection with the accompanying drawings, in which:
Fig. 1 is a schematic block diagram illustrating a power supply control system with a power control microprocessor for use in a computer system, according to one embodiment of this invention;
Fig. 2 is a diagram illustrating the power control microprocessor shown in Fig. 1;
Fig. 3 and 4 (a), (b) are flowcharts illustrating sequences to control the power supply when a power switch ON or OFF, which are performed by the power control microprocessor;
Fig. 5(a) is a perspective top view of a computer system in which the invention is used.
Fig. 5(b) is a perspective view of the principal part of a push-button-power-switch in the computer system;
Fig. 6 is a diagram illustrating the operating states and layout of LED's used with the invention.

### Detailed Description of the Preferred Embodiments

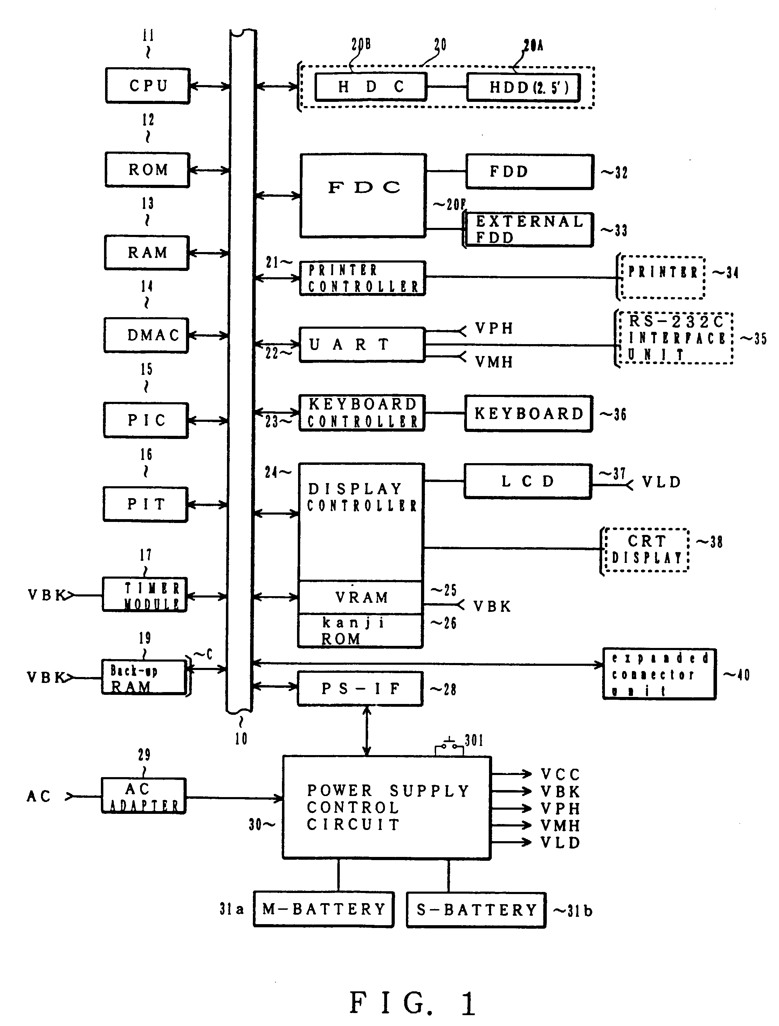

Fig. 1 is a schematic block diagram illustrating a power supply control system with a power control microprocessor for use in a computer system according to one embodiment of this invention.

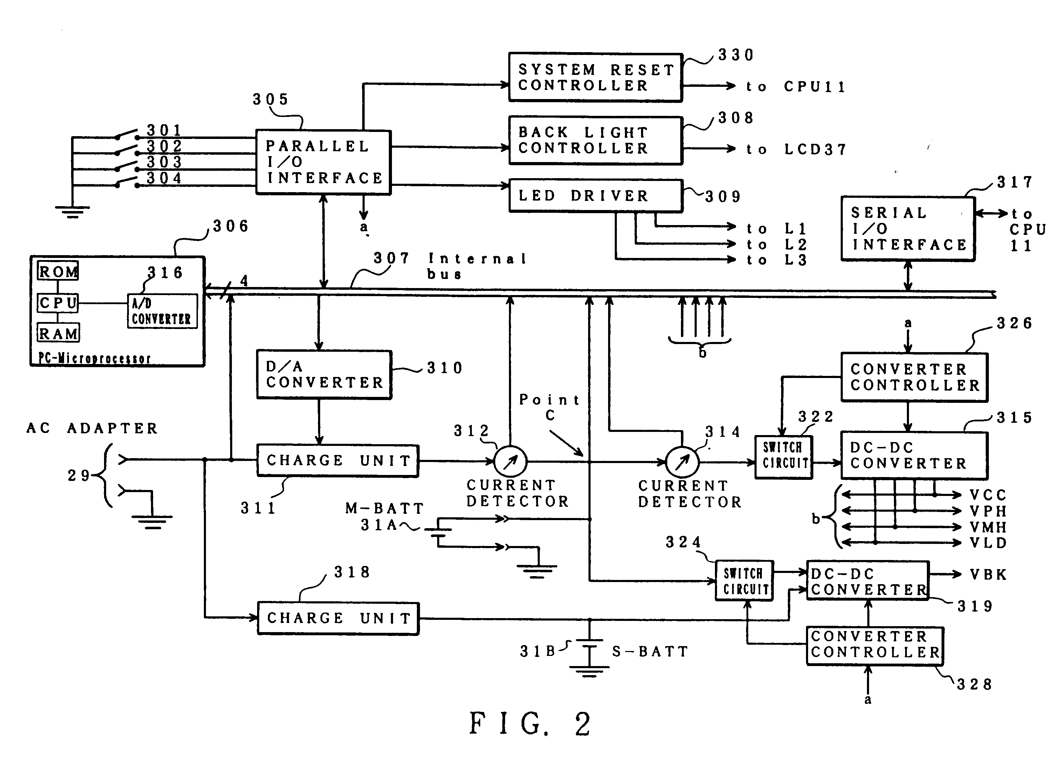

As illustrated, computer system 1 includes a CPU 11 for operating the computer system 1 using programs in programmed Read Only Memory (ROM) 12 which stores a basin input output system program therein, a random access memory (RAM) 13 which stores application programs and data, and a direct memory access (DMA) controller 14 for controlling the transmission of data directly between RAM 13 nd an input/output apparatus, for example, hard and floppy disc drives. A programmable interrupt controller (PIC) 15, a programmable interval timer (PIT) 16, a real-timer clock (RTC) 17 having a timer module supply with a back-up voltage (hereafter called VBK +5VDC) are also provided. A expanded RAM 18 using particular card slots provides the VBK (not shown) and a Back-up RAM 19 having display data therein contains the contents of a program counter for a currently-running program, various registers and a memory and 1/O statuses, so that it can restart an interrupted job when repowered. A hard disk pack 20 may fit articular card slots, which comprise a 2.5 inch hard disk drive (HDD) 20A and a hard disk controller (HDC) 20B. A floppy disk controller (FDC) 20F may control access to a floppy disk drive (FDD) 32 connected thereto. A printer controller (PRT-CONT) 21 may control access to a printer 34 connected thereto by a cable. A universal Asynchronous Receiver/Transmitter (UART) 22 provides a serial input output interface, which is provided with a voltage VPH (+12VDC) and a voltage VMH (+9VDC) and keyboard controller (KBC) 23 controls a keyboard 36 connected thereto. A display controller (DISP-CONT) 24 controls display of data on an LCD display device Video Random Access Memory (VRAM) 25 is a refresh memory to store data on LCD 37 or CRT 38, which is provided with the VBK. A kanji-ROM 2G is accessed by kanji character codes, and stores kanji characters patterns. An interface 28 control of the power supply circuit (PF-IF) is connected to CPU 11 via a system bus 10 as shown Fig.2. An AC adapter 29 converts an AC voltage (+120 V) to a DC voltage (+12 VDC) and is plugged to a portable computer via a DC-in-12V pack. A main battery (M-BATT) 31A, as well as a sub battery (S-BATT) comprises a chargeable battery (i.e., a nickel-cadminum battery) to provide DC +7 to +8V, and comprises a removable pack. An external floppy disk drive 33 may be connected to FDC 20F by a cable. An RS-232C interface may be connected to an input/output interface 22 by a cable, and LCD 37 may be connected to DISP-CONT 34, which is provided with VLD (-22DVC)or an expansion connector 40 may be connected to expanded units by a cable. It will be appreciated that different system configurations are possible.

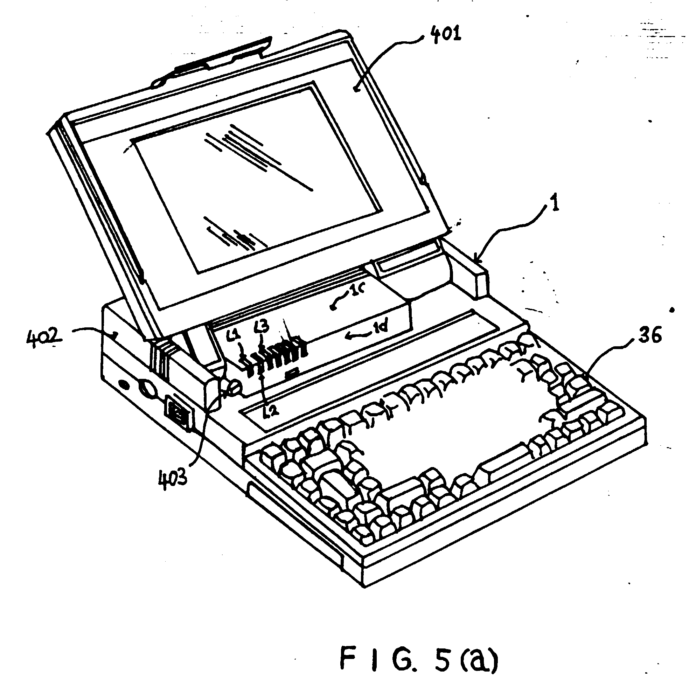

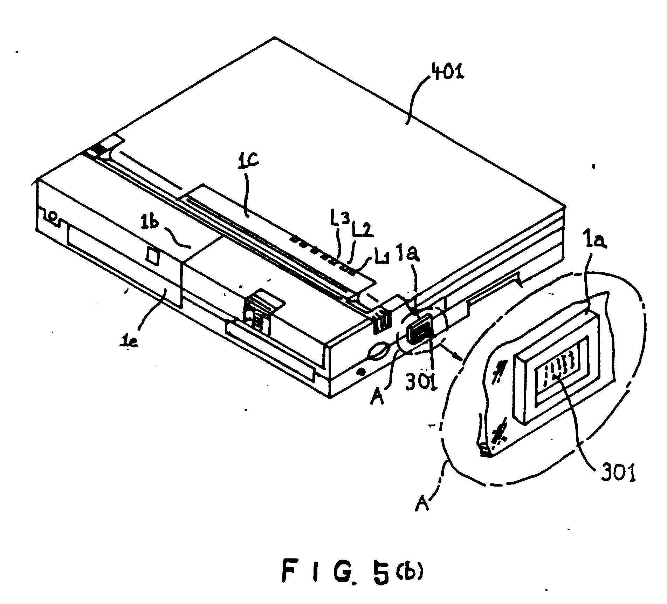

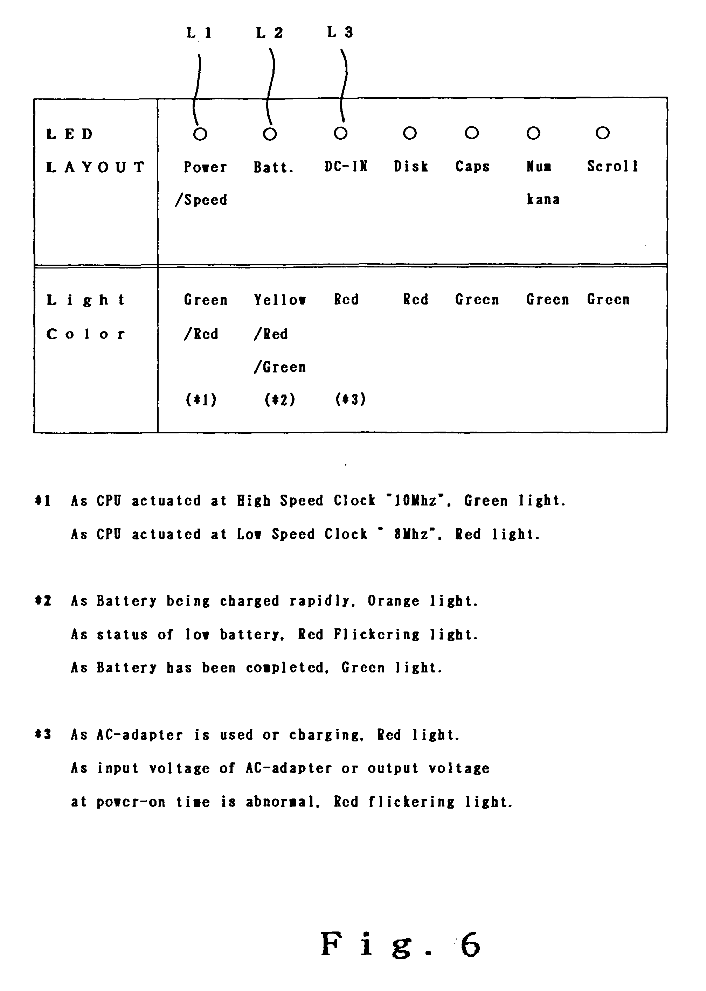

As shown in Fig.2, the power supply control circuit 30 has a built-in 4-bit one-chip microprocessor 306, which may be a module TMP47C440AF (a Toshiba product). The power control micro-processor 306 (PC-microprocessor) is always provided with the power supply of the M-battery (not shown) The PC-microprocessor 306 like the main computer system described above, also comprises a CPU, RAM for storing data, and a ROM for storing a control program. In addition PC-microprocessor 306 may control the power supply supplied to each of computer's components in accordance with current states flowing from charge unit 311 to M-BATT 31A and DC-DC converter 315, which are detected by current detectors 312, 314, and switching ON/OFF states which are changed by a power-switch 301. A reset switch 302, a display switch 303, and a mode switch 304 are provided. Parallel I/O (PIO) interface 305 is connected to a power-switch 301, and a reset switch 302 for initializing computer components is included. A switch 303 for supplying the power supply to LCD 37, and a mode switch 304 for setting a mode to actuate the expansion unit are provided. The parallel I/O interface may hold the ON/OFF state of the switches mentioned above. The interface 305 sends the states mentioned above to PC-microprocessor 306 via the internal bus 307 or DC-DC converter 315 directly. A back-light controller 308 may output a power supply to be supplied into LCD 37 in accordance with a set of a variable register, so that the intensity of radiation of the back-light is changed. LED driver 309 may control an LED L1 for indicating the ON/OFF state of power switch 301 and the clock speed of CPU 11, an LED L2 for indicating the capacity of the battery voltage,

or an LED L3 for indicating whether AC adapter 29 is present, as shown in Fig.5 (a). The LED displays may be three different colours (red and green or orange), as shown Fig.6. When the green light in LED L1 is on, CPU 11 is being operated at high clock speed 10MHz. When the red light in LED L1 is on, CPU 11 is being operated at low clock speed 8 MHz. When the orange light in LED L2 is on, batteries 31A, 31B are being charged rapidly. When the red light in LED L2 is flickering, the voltage of M-battery 31A is low. When the green light in LED L2 is on, its charging is completed. When the red light in LED L3 is on, AC adapter 29 is in use or charging. When the red light is flickering, an abnormality is present in the input voltage of AC adapter 29 or the output voltage at the power-on time or the self test of the power supply is abnormal. A digital-to-analog (D/A) converter 310 may convert the output from PC-microprocessor 306 to an analog signal, i.e., a control-signal, and send it to charge unit 311. Charge unit 311, which comprises a 256 bit DC-DC converter, may charge M-battery 31A in accordance with the charge-control-signal sent from D/A converter 310. Current detector 312 may detect a total direct current flowing to M-battery and DC-DC converter 315. A current detector 314 may detect the direct current flowing to DC-DC converter 315. A DC-DC converter 315 may convert a DC voltage (+12DVC) supplied from AC adapter 29 or M-battery 31A to the power supply voltage of, for example, +5V, +12V, -9V, -15V, +5V and +12V, which are supplied to computer system 1. An analog-to-digital (A/D) converter 316 may converter 316 may convert analog input voltages, which are current values of the current detectors. output voltage of M-battery 31A and power supply of the individual powers, to a digital voltage, which is supplied to PC-microprocessor 306. A/D converter 316 may have an 8-channel analog input terminal, so as to equally divide an input analog voltage into 255 sections. A serial I/O interface (S10) 317 may communicate the commands sent between PC-microprocessor 306 and main CPU 11. A charge unit 318 may charge a S-battery 31B. DC-DC converter 319, as well a DC-DC converter 315, may convert to voltage of charge unit 318 and S-battery 31B to the VBK to be supplied RAM 13, expanded RAM 18, back-up RAM 19 and VRAM 25.

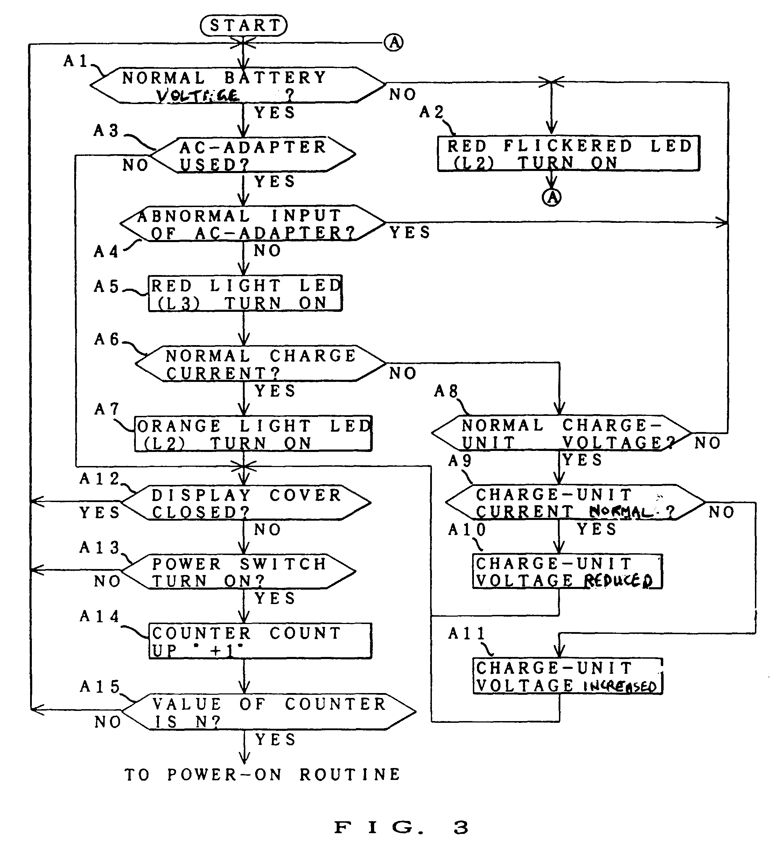

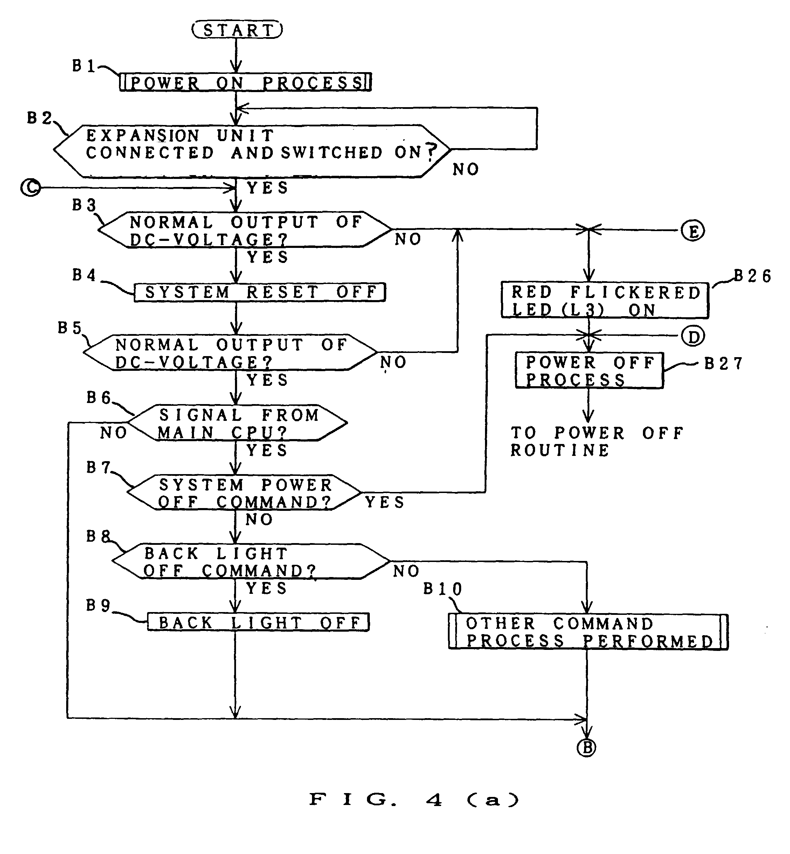

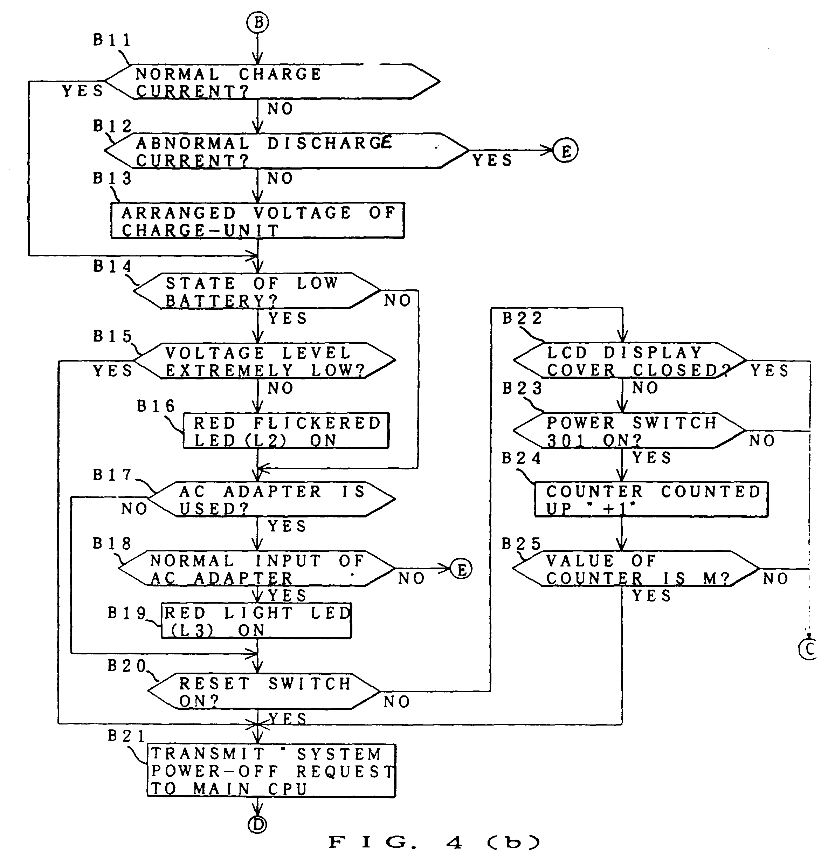

Each of Figs. 3 and 4 illustrates a flowchart of a control sequence performed by PC-microprocessor 306.

Fig. 5 is a perspective top view of a computer system 1. Fig. 5(a) is a perspective view illustrating when a display cover of the portable computer 1 is being cleared. Fig 5(b) is an expanded perspective view of the power-switch 301 shown by letter A. As shown in Fig.5 (b), a wall 1a along the edge of push-button-switch 301, referred to as a "protect wall" hereafter, is formed so as to enclose push-button-switch 301 on the side surface 405 of the computer body 402, so that it may prevent an operator from inadvertently pushing push-button-switch 301 while carrying a computer system 1. However is possible for an operator to intentionally push the push-button-switch 301 anytime. The LED displays of L1, L2, and L3, etc., respectively are formed in a corner part of the computer body 402 in rectangle 1b at the rear top surface 1c, the flat edge surface 1d and rear surface 1e. Therefore, an operator can easily identify the LED display state, which represent the operating states of the components mentioned above, regardless of whether display cover 401 is open or closed.

The flowcharts in Figs.3 and 4 describe a process routine in which PC-microprocessor 306 controls the power supply. The PC-microprocessor 306 in power supply control circuit 30 detects the ON/OFF state of the power switch 301 at all times. Thus, PC-microprocessor 306 executes the power-off routine in Fig.3 if the power-switch 301 is off. In case the power-switch 301 is on, the ON state of the power switch 301 is held in PIO interface 305 and the state signal is sent to PC-microprocessor 301 through PIO interface 305. PC-microprocessor 301 acknowledges the fact that the power-switch 306 is on in step A13.
Thus, in step A1, it is determined whether the M-battery voltage is above a predetermined level. The M-battery's voltage value transferred to PC-microprocessor 306 through A/D converter 316. If the determination in step A1 is NO, PC-microprocessor sends signal, which causes the red light in the LED 12 to flicker as shown Fig. 6. LED driver 309 sends this through the PIO 305 interface in step A2, and it is returned in step A1.

If the determination in step A1 is YES, it is determined whether AC adapter 29 is in use in step A3. Thus, a voltage value transferred to PC-microprocessor 306 through A/D converter 316 may be anywhere between 0.4VDC and 10VDC. If PC-microprocessor 310 determines that AC adapter 29 is not in use, the processs jumps to step A12.

If the determination in step A3 is that adapter 29 is present, it is determined whether the voltage value supplied from AC adapter 29 may be anywhere between 11VDC and 16DVC. If it is outside the predetermined range, the process jumps to step A2. If it is within the predetermined range, the process advances to step A5, where a PC-microprocessor 306 sends a signal to LED driver 309 through PIO 305. Thus, it means that the red light in LED L3, as shown Fig. 6, is ON.

In step A6, it is determined whether the value of charge current supplied to M-battery 31A by charge unit 311 is above a predetermined value. If so, the charge current detected by current detector 312 at point C is transferred to PC-microprocessor 306 through A/D converter 316. If the determination in step A6 is YES, an orange light in LED L2 in step A7, as shown Fig.6, is driven according to the control signal output from PC-microprocessor 306 to LED driver 309 through PIO 305 when the detected charge current is held at a predetermined value or green light in LED L2 in step A7 is driven when the charge capacity of M-battery 31A is adequate. By driving LEDs constituted by two colors, the operational state of the computer system may be signaled in detail even when the display cover 401 is being closed. If the determination in step A6 is NO, it is determined whether the voltage value of charge unit 311, as shown Fig.2, may be anywhere between 5VDC and 10.5VDC. If the determination in step A8 is NO, it returns to the program process in step A2. If the determination in step A8 is YES, the process advances to step A9 where it is determined whether the current value of the charge-unit 311 is higher than a predetermined value. If the determination in step A9 is NO, the process advances to step A11, where charge-unit 311 performs one step-up. This means that the voltage value, which may be anywhere from 3.0VDC and 11.0VDC, outputted from charge unit 311 is divided by 256 (referred to as "one step" hereafter) is added to the voltage charging up M-battery 31A so far, in accordance with the signal from PC-microprocessor 306 through D/A converter 310. On the other hand, if the determination in step A9 is YES, the charge-unit 311 may perform a one step-down. This means that the voltage value to charge-up M-battery 31A goes down one step in step A10, in accordance with the signal from PC-microprocessor 306 through D/A converter 310.

After those processes in steps 10 or 11, mentioned above, have been performed, the process advances to step A12 where it is determined whether display cover 401 is closed in accordance with the switch signal representing an ON/OFF state of switch 303. This is transferred through PIO interface 305. The following describes how the ON/OFF state of switch 303 is detected. A line which connects switch 303 to PIO 305 is set in advance at high level "1" and then, when display cover 401 is closed, switch 303 turns on and the line is grounded, thus changing the line's logical level from "1" to "0". In this manner, the ON/OFF state of switch 303 may be detected. If the determination in step A12 is YES, the process returns to step A1. On the other hand, the process advances to step A13 if the determination in step A12 is NO.

In steps A14 and A15, whenever PC-microprocessor 301 acknowledges the fact that the power-switch state is on, a counter (not shown), referred to as "CTR" hereafter, after detects the time of pushing the power-switch 306 by an operator, is incremented by 1, and the processes in steps A1 through A15 in Fig. 3 are repeated until the counter reaches a predetermined value.

The power-off-routine mentioned above from A1 to A15 is repeated until an operator has pushed a power switch 301. If the CTR counts up to a predetermined value, for for example N or a certain times, the power-on routine is performed.

In step B1, the power-on routine, the PC-microprocessor 306 sends control signals for controlling the DC-DC converter controller 326, 328, through the PIO interface, and the DC-DC converter controller 326, 328 may control DC-DC converter 315, 319 when switches 322, 324 are turned on at OVDC in turn by the converter controllers 326, 328, so that the power supply begins to be supplied to each of computers components (not shown).

In next step B2, it is determined whether the expanded unit 40 has been connected and its power-switch turned on in accordance with the switch signal representing the ON/OFF state of a mode switch 304, which is transferred through PIO 305. If the determination in step B2 is NO, step B2 is repeated. On the other hand, if it is determined that the state of the mode switch 304 is ON, the process advances to step B3 where it is determinated whether DC-DC converter 315 supplies, for example, +5VDC, +12VDC, -9VDC, -22VDC to computer's components, which voltages of its power supply are sent to PC-microprocessor 306 through A/D converter 316. If the determination in step B3 is NO, the process advances to step B26 where PC-microprocessor 306 sends the signal to LED driver 309 through the PIO interface 305. This means that LED L3 is flickering red, as shown Fig.6.

If the determination in step B3 is YES, the process advances to step B4 where PC-microprocessor 306 outputs the system reset signal to system reset control circuit 330 through PIO 305, and then system reset control circuit 330 sends the reset signal to main CPU 11. After main CPU 11 receives the reset signal, main CPU 11 sets up the computer's components.

In step B5 as well as step B3, it is determined whether DC-DC converter 315 supplies power to the computer components. If the determination in step B5 is NO, the process skips to step B26. If the determination in step B5 is YES, the process advances to step B6, where it is determined whether main CPU 11 sent commands to PC-microprocessor 306 through PS-IF 28 and SIO 317. If the determination in step B6 is YES, it is determined whether the command is a "System Power Off Command" from main CPU 11, and then if the determination in step B7 is YES, the process skips to step B27 where a system power-off process is performed, which it is described in detail hereafter. If NO in step B7, the process advances to B8, where a PC-microprocessor 306 determines whether the command is a "back light ON/OFF request". If the determination in step B8 is YES, PC-microprocessor 306 sends a "turn off signal" to back-light controller 308 through PIO 305, and back-light controller 308 turns off the back-light in step B9 after receiving the "turn off signal", and the process advances to B11. If the determination in step B8 is NO. it is determined whether AC adapter 29 is in use in step B10, and if present, the red light or red flickering light in LED L3 in step B10 is driven according to the output control signal from PC-microprocessor 306. Also, PC-microprocessor 306 calculates the amount of energy remaining in the M-battery 31A. The manner for calculating the amount of energy remaining was described in a prior patent of the same assignee, US-A-5339446, if NO in step B6, the process advances to step B11.

In step B11, it is determined whether the charge current value, flowing from charge-unit 311 detected by current detector 312 and the current value flowing from the M-battery to the DC-DC converter 315, detected by current detector 314 are transferred to PC-microprocessor 306 through A/D converter 316. If both current values detected are not within predetermined ranges, the process advances to step B12, where it is determined whether the current value flowing from the M-battery is abnormal. If YES in step B12, the process skips to B26, where the red light flickering state of LED 12 is driven. If NO in step B12, charge-unit 311 performs the same step mentioned above. On the other hand, if the determination in step B11 is YES, the process skips to step B14.

In step B14, it is determined whether the remaining energy level of the M-battery 31A is low. The detection of the low battery state will now be explained. According to the invention of US-A-5339446 of the same assignee, PC-microprocessor 305 changes the voltage value for detecting the low battery in accordance with the current flowing from M-battery 31A, so as to ensure accurate low battery detection. If the determination in step B14 is NO, the process skips to step B17. On the other hand, if YES in step B14, the process advances to step B15, where PC-microprocessor 305 determines whether the voltage value supplied from M-battery 31A to DC-DC converter 315 has decreased below a predetermined voltage value in accordance with the detection of low battery state of M-battery 31A in step B14. If the determination in step B15 is NO, the red light flickering of LED L2, as shown Fig. 6, is actuated according to the output control signal from the PC-microprocessor 306. The process then advances to step B17, where it is determined whether AC adapter 29 is in use. If the determination in step B17 is NO, the process skips to step B20. On the other hand, if YES in step B17, the process advances to step B18. whether the supply voltage supplied from AC adapter 29 is e.g. 10 VDC or low, e.g. 0VDC. If the determination in step B18 is NO, the process jumps to step B26. On the other hand, if it is YES in step B18, the process advances to step B19, where the red light in LED L3 is driven according to the output control signal from PC-microprocessor 305.

In step B20, it is determined whether the ON or OFF state of reset switch 302 is detected, which is transferred through PIO 305. If the determination in step B20 is NO, it moves to step B22. In step B22, it is determined whether the ON or OFF state of switch 303 is detected, i.e., whether the display cover 401 is open. If YES in step B22, the process returns to step B3. If NO in step B22, the process advances to step B23 where PC-microprocessor 305 determines whether the ON/OFF state of power switch 301 is detected. If a signal transferred through PIO 305 is at a logical level "1", the process returns to step B3. On the other hand, if the signal is at a logical level "0", the process advances to step B24, where if PC-microprocessor 301 may acknowledge the fact that the power switch state is ON, and the CTR is increased by one (+1). In step B25, it is determined whether CTR has counted up to the predetermined value, for example, M times. If NO in step B25, the process returns to step B3.

In step B15 or step B20 or B25, if the determination is YES, the process advances to step B21 and then step B27, where the PC-microprocessor sends the "System Power Off Request" to computer system 1. This is transferred through SIO 317 and PS-IF 28, and then PC-microprocessor waits for the "ACK" signal sent from main CPU 11. In response to this request signal, main CPU 11 returns the "ACK"to the PC-microprocessor.

When the "ACK" signal does not return to the PC-microprocessor, the PC-microprocessor determines that some kind of abnormality, such as a program crash has occurred on the computer system side, and performs an HDD 20 power off sequence to protect HDD 20. Upon reception of the "ACK" signal, the PC-microprocessor waits for the "System Power Off Request" from main CPU 11 for one minute ( five minutes in the case of low battery).

When receiving the "System Power Off Request" from the PC-microprocessor and returning the "ACK" signal thereto, main CPU 11 interrupts the currently-running program and saves the content of memory 13, 18, the I/O statuses, the contents of the registers,etc. into back-up RAM 10 (with a memory capacity of, for example, 16K bytes). This is provided on the computer side. At this time, when FDD 32 or HDD 20A is being accessed, the save operation is performed after an access end is reached (Resume Function).

When the PC-microprocessor waits one minute ( or five minutes) yet does not receive the "System Power Off Command" from main CPU 11, it sends the "Time Out Power Off Request" to main CPU 11.

Upon reception of the "Time Out Power Off Command," main CPU 11 returns the "ACK" signal to the PC-microprocessor and performs the save operation as much as possible until the power is turned off. When the save operation is completed, main CPU 11 returns the "System Power Off Command" to the PC-microprocessor and enters a halt (HLT) mode.

Upon reception of the "System Power Off Command" the PC-microprocessor returns the "ACK" signal to main CPU 11, cuts off the power supply to computer components, and the process advances to the power-off routine.

As mentioned above, PC microprocessor 306 performs the power off routine, as shown Fig.3, when stopping the power supply to computer components, and performs the power on routine when supplying power to them.

Numerous modifications and variations of the present invention are possible in the light of the above teachings. It is therefore to be understood that, within the scope of the appended claims, the present invention can be practiced in a manner other than as specifically described herein.

## Claims

1. A power supply control system for a computer, the computer having a CPU (11), a power-on-switch (301), and being operable in response to power supplied from rechargeable batteries (31A,31B) or an alternating current adapter (29), a display cover (401) pivotable on a computer body (402), and a display switch (303) controlled in accordance with the position of the display cover (401), comprising;
power supply circuit means (315, 322, 326) coupled to one of the batteries (31A) for supplying the power to each of the computer components;
a power control microprocessor (306) coupled to a reset switch (302), a mode switch (304), said power-on-switch (301) and said display switch (303) for controlling the power supplied from the battery (31A) independently of the CPU (11);
the microprocessor (306) including first means for determining an ON/OFF state of said switches (301, 302, 303, 304) and second means for determining the operational state of the computer, and further including means for producing a control signal in accordance with the first and second determination results; and
means (322, 326) coupled to the microprocessor (306) for controlling an ON/OFF condition of the power supply circuit means (315, 322, 326) in accordance with said control signal from the microprocessor (306).

2. A power supply control system according to claim 1, wherein the power supply circuit means includes a DC - DC. converter (315) for generating the various voltage levels supplied to each of the computer components.

3. A power supply control system according to claim 2, wherein the second means for determining includes means (306) for determining whether the computer is in use.

4. A method for controlling the power supply in a battery powered computer, the computer
having a CPU (11), a power-on-switch (301), and being operable in response to power supplied from rechargeable batteries (31A,31B) or an alternating current adapter (29), a display cover (401) pivotable on a computer body (402), and a display switch (303) controlled in accordance with the position of the display cover (401), comprising;
power supply circuit means (315, 322, 326) coupled to one of the batteries (31A) for supplying the power to each of the computer components;
a power control microprocessor (306) coupled to a reset switch (302), a mode switch (304), said power-on-switch (301) and said display switch (303) for controlling the power supplied from the battery (31A) independently of the CPU (11);
the microprocessor (306) including first means for determining an ON/OFF state of said switches (301, 302, 303, 304) and second means for determining the operational state of the computer, and further including means for producing a control signal in accordance with the first and second determination results; and
means (322, 326) coupled to the microprocessor (306) for controlling an ON/OFF condition of the power supply circuit means (315, 322, 326) in accordance with said control signal from the microprocessor (306),
and the computer having at least one visible indicator (L1, L2, L3), the method comprising steps of:
determining (A6) the status of a charging current flowing from the AC adapter (29) to the rechargeable battery (31A);
controlling (A8 ~) the charge current flowing from the AC adapter (29) to the rechargeable battery (31A) in accordance with the determination results;
determining (A13) an operational state of said power switch (301); and
incrementing a counter (A14) only when the operation state is "on", repeating said steps (A6 - A14) until the counter has reached a predetermined number, and then starting a "power-on" routine.

5. A method according to claim 4, wherein the controlling step includes;
detecting (A8) the voltage of the charge unit (311) for controlling the power supply from the AC adaptor (29) to the rechargeable battery (31A);
comparing the voltage with a reference value; and
indicating (A2) the voltage status of the charge unit (311) in accordance with the comparison result.

6. A method according to claim 4, wherein the controlling step includes:
comparing the detected current with a reference value; and
reducing (A10) the output voltage of the charge unit (311) if the detected current is lower than the reference value.

7. A method according to claim 4, wherein the controlling step includes:
comparing the detected current with a reference value; and
increasing (A11) the output voltage of the charge unit (311) if the detected current is higher than the reference value.

8. A method according to claim 4, wherein the controlling step includes:
detecting (A6) the charge current flowing from the charge unit (311) to the rechargeable battery (31A);
comparing the detected current with a reference current range (A6); and
indicating (A7) the status of the charging current if the detected current is within the reference current range.

9. A method according to claim 4, further comprising the steps of:
detecting the voltage (A1) of the battery (31A);
comparing (A3) the voltage with a reference voltage; and
indicating (A2) the status of the chargeable battery (31A) in accordance with the comparison results.

10. A method according to claim 4, further comprising:
detecting (A4) the input voltage of the AC adaptor (29);
comparing (A4) the output voltage of the AC adaptor with a reference voltage; and
indicating (A2, A5) the output voltage status of the AC adapter (29) in accordance with the comparison result.

11. A method according to any of claims 5, 8, 9 or 10, wherein the indicating step includes a step (A2, A5, A7) of generating a light control signal from the power control microprocessor (306) to the visible indicator (L2, L3) through a parallel input/output interface (305), which represents the operating state of the computer system.

12. A method according to claim 11, wherein the visible indicator (L2, L3) includes means (309) for displaying at least two colours.

13. A method according to claim 4, further comprising the steps of:
comparing (A15) the counter value with a reference value; and
advancing (B1) processes to supply the power to the components in the computer system (1) in accordance with comparison result.

## Patentansprüche

1. Stromversorgungssteuerungssystem für einen Computer, wobei der Computer eine CPU (11), einen Ein-Schalter (301), und der mit Strom zugeführt aus wiederaufladbaren Batterien (31A, 31B) oder einem Wechselstromadapter (29) betreibbar ist, einen Bildschirmdeckel (401), der schwenkbar an einem Computergehäuse (402) ist, und einen Bildschirmschalter (303) hat, der gemäß der Stellung des Bildschirmdeckels (401) gesteuert wird, mit:
- einer Stromversorgungsschaltungseinrichtung (315, 322, 326), die mit einer der Batterien (31A) verbunden ist, um alle Computerkomponenten mit Strom zu versorgen;
- einem Stromsteuerungsmikroprozessor (306), der mit einem Zurücksetzschalter (302), einem Betriebsartschalter (304), dem Ein-Schalter (301) und dem Bildschirmschalter (303) verbunden ist, um den von der Batterie (31A) zugeführten Strom unabhängig von der CPU (11) zu steuern;
- wobei der Mikroprozessor (306) erste Mittel zum Bestimmen eines Ein/Aus-Zustands der Schalter (301, 302, 303, 304) und zweite Mittel zum Bestimmen des Betriebszustands des Computers aufweist und weiter ein Mittel zum Erzeugen eines Steuersignals nach Maßgabe der ersten und zweiten Bestimmungsergebnisse enthält; und
- Mitteln (322, 326), die mit dem Mikroprozessor (306) verbunden sind, um einen Ein/Aus-Zustand der Stromversorgungsschaltungseinrichtung (315, 322, 326) nach Maßgabe des Steuersignals aus dem Mikroprozessor (306) zu steuern.

2. Leistungsversorgungssteuerungssystem nach Anspruch 1, wobei die Leistungsversorgungsschaltungseinrichtung einen Gleichstrom-Gleichstrom-Konverter (315) zum Erzeugen verschiedener Spannungsniveaus, die den Computerkomponenten zugeführt werden, enthält.

3. Leistungsversorgungssteuerungssystem nach Anspruch 2, wobei das zweite Mittel zum Bestimmen Mittel (306) zum Bestimmen, ob der Computer in Gebrauch ist, hat.

4. Verfahren zum Steuern der Stromversorgung in einem batteriebetriebenen Computer, wobei der Computer eine CPU (11), einen Ein-Schalter (301), und der mit Strom zugeführt aus wiederaufladbaren Batterien (31A, 31B) oder einem Wechselstromadapter (29) betreibbar ist, einen Bildschirmdeckel (401), der schwenkbar an einem Computergehäuse (402) ist, und einen Bildschirmschalter (303) hat, der gemäß der Stellung des Bildschirmdeckels (401) gesteuert wird, mit:
- einer Stromversorgungsschaltungseinrichtung (315, 322, 326), die mit einer der Batterien (31A) verbunden ist, um alle Computerkomponenten mit Strom zu versorgen;
- einem Stromsteuerungsmikroprozessor (306), der mit einem Zurücksetzschalter (302), einem Betriebsartschalter (304), dem Ein-Schalter (301) und dem Bildschirmschalter (303) verbunden ist, um den von der Batterie (31A) zugeführten Strom unabhängig von der CPU (11) zu steuern;
- wobei der Mikroprozessor (306) erste Mittel zum Bestimmen eines Ein/Aus-Zustands der Schalter (301, 302, 303, 304) und zweite Mittel zum Bestimmen des Betriebszustands des Computers aufweist und weiter ein Mittel zum Erzeugen eines Steuersignals nach Maßgabe der ersten und zweiten Bestimmungsergebnisse enthält; und
- Mitteln (322, 326), die mit dem Mikroprozessor (306) verbunden sind, um einen Ein/Aus-Zustand der Stromversorgungsschaltungseinrichtung (315, 322, 326) nach Maßgabe des Steuersignals aus dem Mikroprozessor (306) zu steuern,
- und wobei der Computer wenigstens eine sichtbare Anzeige (L1, L2, L3) aufweist, wobei das Verfahren die Schritte hat:
- Bestimmen (A6) des Status eines Ladestroms, der von einem Wechselstromadapter (29) zu der wiederaufladbaren Batterie (31A) fließt,
- Steuern (A8) des Ladestroms aus dem Wechselstromadaptere (29) zur wiederaufladbaren Batterie (31A) gemäß den Ergebnissen der Bestimmung;
- Bestimmen (A13) des Betriebszustands des Ein-Schalters (301); und
- Heraufzählen eines Zählers (A14) nur in dem Fall, wenn der Betriebszustand "Ein" ist, Wiederholen der Schritte (A6-A14), bis der Zähler eine vorgegebene Zahl erreicht hat und anschließend Starten eines "Leistung-Ein-Programms".

5. Verfahren nach Anspruch 4, wobei die Steuerungsschritte enthalten:
- Detektieren (A8) der Spannung der Ladeeinheit (311), um die Stromzufuhr aus dem Wechselstromadapter (29) zu der wiederaufladbaren Batterie (31A) zu steuern;
- Vergleichen der Spannung mit einem Bezugswert; und
- Anzeigen (A2) des Spannungszustands der Ladeeinheit (311) nach Maßgabe des Vergleichsergebnisses.

6. Verfahren nach Anspruch 4, wobei der Steuerungsschritt enthält:
- Vergleichen des detektierten Stroms mit einem Bezugswert; und
- Reduzieren (A10) der Ausgangsspannung der Ladeeinheit (311), wenn der detektierte Strom kleiner als der Bezugswert ist.

7. Verfahren nach Anspruch 4, wobei der Steuerungsschritt enthält:
- Vergleichen des detektierten Stroms mit einem Bezugswert; und
- Erhöhen (A11) der Ausgangsspannung der Ladeeinheit (311), wenn der detektierte Strom höher als der Bezugswert ist.

8. Verfahren nach Anspruch 4, wobei der Steuerungsschritt enthält:
- Detektieren (A6) des aus der Ladeeinheit (311) zur wiederaufladbaren Batterie (31A) fließenden Ladestroms;
- Vergleichen des detektierten Stroms mit einem Strombezugsbereich (A6); und
- Anzeigen (A7) des Status des Ladestroms, wenn der detektierte Strom innerhalb des Strombezugsbereichs liegt.

9. Verfahren nach Anspruch 4, das weiter die Schritte aufweist:
- Detektieren der Spannung (A1) der Batterie (31A);
- Vergleichen (A3) der Spannung mit einer Bezugsspannung; und
- Anzeigen (A2) des Status der aufladbaren Batterie (31A) nach Maßgabe des Vergleichsergebnisses.

10. Verfahren nach Anspruch 4, das weiter aufweist:
- Detektieren (A4) der Eingangsspannung des Wechselstromadapters (29);
- Vergleichen (A4) der Ausgangsspannung des Wechselstromadapters mit einer Bezugsspannung; und
- Anzeigen (A2, A5) des Ausgangsspannungsstatus des Wechselstromadapters (29) nach Maßgabe des Vergleichsergebnisses.

11. Verfahren nach einem der Ansprüche 5, 8, 9 oder 10, wobei der Anzeigeschritt einen Schritt (A2, A5, A7) umfaßt, in dem ein Beleuchtungssteuersignal aus dem Stromsteuerungsmikroprozessor (306) durch eine parallele Eingabe/Ausgabe-Schnittstelle (305) zu der sichtbaren Anzeige (L2, L3) geleitet wird, die den Betriebszustand des Computersystems anzeigt.

12. Verfahren nach Anspruch 11, wobei die sichtbare Anzeige (L2, L3) Mittel (309) zum Anzeigen von wenigstens zwei Farben umfaßt.

13. Verfahren nach Anspruch 4, das weiter die Schritte aufweist:
- Vergleichen (A15) des Zählerwertes mit einem Bezugswert; und
- Fortfahren (B1) mit Prozessen zum Versorgen der Komponenten in dem Computersystem (1) mit Strom nach Maßgabe des Vergleichsergebnisses.

## Revendications

1. Système de commande d'alimentation pour un ordinateur, l'ordinateur comportant une UC (11), un commutateur de mise sous tension (301), et pouvant être actionné en réponse à une alimentation délivrée par des batteries rechargeables (31A, 31B) ou par un adaptateur de courant alternatif (29), un couvercle d'affichage (401) pouvant pivoter sur un corps d'ordinateur (402) et un commutateur d'affichage (303) étant commandé en fonction de la position du couvercle d'affichage (401), comprenant;
des moyens de circuit d'alimentation (315, 322, 326), couplés à l'une des batteries (31A), pour délivrer l'alimentation à chacun des composants de l'ordinateur;
un microprocesseur de commande d'alimentation (306), couplé à un commutateur de réarmement (302), à un commutateur de mode (304), audit commutateur de mise sous tension (301) et audit commutateur d'affichage (303), pour commander l'alimentation délivrée depuis la batterie (31A), indépendamment de l'UC (11);
le microprocesseur (306) comportant des premiers moyens pour déterminer un état MARCHE/ARRET desdits commutateurs (301, 302, 303, 304), et des deuxièmes moyens pour déterminer l'état opérationnel de l'ordinateur, et comportant en outre des moyens pour créer un signal de commande en fonction du premier et du deuxième résultats de détermination; et
des moyens (322, 326), couplés au microprocesseur (306), pour commander un état MARCHE/ARRET des moyens de circuit d'alimentation (315, 322, 326), en fonction dudit signal de commande provenant du microprocesseur (306).

2. Système de commande d'alimentation selon la revendication 1 dans lequel les moyens de circuit d'alimentation comportent un convertisseur CC-CC (315), pour générer les divers niveaux de tension délivrés à chacun des composants de l'ordinateur.

3. Système de commande d'alimentation selon la revendication 2, dans lequel les deuxièmes moyens pour déterminer comportent des moyens (306) pour déterminer si l'ordinateur est en cours d'utilisation.

4. Procédé de commande d'alimentation dans un ordinateur alimenté par batterie, l'ordinateur comportant une UC (11), un commutateur de mise sous tension (301), et pouvant être actionné en réponse à une alimentation délivrée par des batteries rechargeables (31A, 31B) ou par un adaptateur de courant alternatif (29), un couvercle d'affichage (401) pouvant pivoter sur un corps d'ordinateur (402) et un commutateur d'affichage (303) étant commandé en fonction de la position du couvercle d'affichage (401), comprenant;
des moyens de circuit d'alimentation (315, 322, 326), couplés à l'une des batteries (31A), pour délivrer l'alimentation à chacun des composants de l'ordinateur;
un microprocesseur de commande d'alimentation (306), couplé à un commutateur de réarmement (302), à un commutateur de mode (304), audit commutateur de mise sous tension (301) et audit commutateur d'affichage (303), pour commander l'alimentation délivrée depuis la batterie (31A), indépendamment de l'UC (11);
le microprocesseur (306) comportant des premiers moyens pour déterminer un état MARCHE/ARRET desdits commutateurs (301, 302, 303, 304), et des deuxièmes moyens pour déterminer l'état opérationnel de l'ordinateur, et comportant en outre des moyens pour créer un signal de commande en fonction du premier et du deuxième résultats de détermination; et
des moyens (322, 326), couplés au microprocesseur (306), pour commander un état MARCHE/ARRET des moyens de circuit d'alimentation (315, 322, 326), en fonction dudit signal de commande provenant du microprocesseur (306), et l'ordinateur comportant au moins un indicateur visible (L1, L2, L3), le procédé comprenant les étapes:
de détermination (A6) de l'état d'un courant de charge s'écoulant depuis l'adaptateur de CA (29) vers la batterie rechargeable (31A);
de commande (A8 -) du courant de charge s'écoulant depuis l'adaptateur de CA (29) vers la batterie rechargeable (31A), en fonction des résultats de la détermination;
de détermination (A13) d'un état opérationnel dudit commutateur d'alimentation (301); et
d'incrémentation d'un compteur (A14), seulement lorsque l'état de fonctionnement est "marche", de répétition desdites étapes (A6 à A14) jusqu'à ce que le compteur ait atteint un nombre prédéterminé, puis de démarrage d'un sous-programme de "mise sous tension".

5. Procédé selon la revendication 4, dans lequel l'étape de commande comporte;
la détection (A8) de la tension de l'unité de charge (311) pour commander l'alimentation depuis l'adaptateur de CA (29) vers la batterie rechargeable (31A);
la comparaison de la tension à une valeur de référence; et
l'indication (A2) de l'état de tension de l'unité de charge (311) en fonction du résultat de comparaison.

6. Procédé selon la revendication 4, dans lequel l'étape de commande comporte;
la comparaison du courant détecté à une valeur de référence; et
la diminution (A10) de la tension de sortie de l'unité de charge (311) si le courant détecté est inférieur à la valeur de référence.

7. Procédé selon la revendication 4, dans lequel l'étape de commande comporte;
la comparaison du courant détecté à une valeur de référence; et
l'augmentation (A11) de la tension de sortie de l'unité de charge (311) si le courant détecté est supérieur à la valeur de référence.

8. Procédé selon la revendication 4, dans lequel l'étape de commande comporte;
la détection (A6) du courant de charge s'écoulant depuis l'unité de charge (311) vers la batterie rechargeable (31A);
la comparaison du courant détecté à une plage de courant de référence (A6); et
l'indication (A7) de l'état du courant de charge si le courant détecté se trouve à l'intérieur de la plage de courant de référence.

9. Procédé selon la revendication 4, comprenant en outre les étapes:
de détection de la tension (A1) de la batterie (31A);
de comparaison (A3) de la tension à une tension de référence; et
d'indication (A2) de l'état de la batterie rechargeable (31A) en fonction des résultats de la comparaison.

10. Procédé selon la revendication 4, comprenant en outre:
la détection (14) de la tension d'entrée de l'adaptateur de CA (29);
la comparaison (A4) de la tension de sortie de l'adaptateur de CA à une tension de référence; et
l'indication (A2, A5) de la tension de sortie de l'adaptateur de CA (29) en fonction du résultat de la comparaison.

11. Procédé selon l'une quelconque des revendications 5, 8, 9 ou 10, dans lequel l'étape d'indication comporte une étape (A2, A5, A7) de génération d'un signal de commande de lumière depuis le microprocesseur de commande d'alimentation (306) vers l'indicateur visible (L2, L3), par une interface parallèle d'entrée/sortie (305), qui représente l'état opérationnel du système d'ordinateur.

12. Procédé selon la revendication 11, dans lequel l'indicateur visible (L2, L3) comporte des moyens (309) pour afficher au moins deux couleurs.

13. Procédé selon la revendication 4, comprenant en outre les étapes de:
comparaison (A15) de la valeur du compteur à une valeur de référence; et
progression (B1) des traitements pour délivrer l'alimentation aux composants du système d'ordinateur (1) en fonction du résultat de la comparaison.
